Europäisches Patentamt

European Patent Office

Office européen des brevets

(19)

(11) Veröffentlichungsnummer: **0 195 226**
**B1**

(12) **EUROPÄISCHE PATENTSCHRIFT**

(45) Veröffentlichungstag der Patentschrift: **25.04.90**

(21) Anmeldenummer: **86101579.0**

(22) Anmeldetag: **07.02.86**

(51) Int. Cl.⁵: **G 11 B 23/087,**
**G 11 B 15/665**

(54) **Kassette für Datenaufzeichnung.**

(30) Priorität: **16.03.85 DE 3509583**

(43) Veröffentlichungstag der Anmeldung:
**24.09.86 Patentblatt 86/39**

(45) Bekanntmachung des Hinweises auf die
Patenterteilung:
**25.04.90 Patentblatt 90/17**

(84) Benannte Vertragsstaaten:
**AT BE CH DE FR GB IT LI LU NL SE**

(56) Entgegenhaltungen:
**DE-A-2 341 364**
**US-A-3 692 255**
**US-A-4 139 873**
**US-A-4 275 424**
**US-A-4 514 774**

(73) Patentinhaber: **Deutsche Thomson-Brandt GmbH**
**Hermann-Schwer-Strasse 3 Postfach 1307**
**D-7730 Villingen-Schwenningen (DE)**

(72) Erfinder: **Schandl, Hartmut**
**Egerstrasse 2**
**D-7730 Villingen-Schwenningen (DE)**

Courier Press, Leamington Spa, England.

## Beschreibung

Es ist aus der Patentschrift US—A—3,692,255 eine Kassette für Datenaufzeichnung bekannt, bei der der Antrieb des Magnetbandes mit Hilfe eines innerhalb der Kassette angeordneten elastischen Antriebsbandes erfolgt. Die Magnetbandwickel werden von dem Antriebsband teilweise umschlungen. Das Antriebsband wird mittels Umlenkrollen und einer Antriebsrolle, die in Kontakt mit einer antreibenden Achse z.B. eines Capstan-Motors verbunden ist, geführt. Der Vorteil einer derartigen Kassette liegt in der einfachen Mechanik, da für den Bandantrieb lediglich eine antreibende Welle benötigt wird. Mittel außerhalb der Kassette wie Bremsen, Rutschkupplungen usw. sind nicht erforderlich. Das Magnetband kann innerhalb der Kassette in beiden Richtungen sehr schnell beschleunigt werden, wobei die Bandspannung annähernd konstant bleibt. Ein Herausziehen des Magnetbandes aus einer derartigen Kassette, z.B. für den Einsatz in Videorecordern, die wegen der hohen Abtastgeschwindigkeit bei geringem Bandvorschub nach dem Helical-Scan-Verfahren arbeiten und bei denen das Magnetband um eine rotierende Kopftrommel geführt ist, ist allerdings wegen des Kontaktes zwischen Magnetbandwickel und Antriebsband nicht möglich.

Der Erfindung liegt die Aufgabe zugrunde, eine Kassette mit den Vorteilen eines durch Antriebsband getriebenen Magnetbandes zu schaffen, aus der das Magnetband herausgezogen und wieder eingezogen werden kann.

Diese Aufgabe wird gemäß der Erfindung durch die aufgeführten Merkmale von Anspruch 1 gelöst. Weiterbildungen der Erfindung sind in den Unteransprüchen gekennzeichnet.

Im Prinzip wird die Aufgabe dadurch gelöst, daß bei einer mittels Antriebsband angetriebenen Kassette für den Aus- bzw. Einfädelvorgang des Magentbandes zwischen Magnetbandwickel und Antriebsband im Bereich der Berührungsfläche beider Bänder ein den Bandantrieb aufhebendes oder umkehrendes Mittel vorzugsweise im Bereich nur einer der beiden Bandwickel eingeschoben wird. Dieses Mittel kann z.B. als eine in Längsrichtung flexible, vorzugsweise aus Kunststoff hergestellte Rollenkette mit drehbar gelagerten Rollen ausgeführt sein oder aus einem Kunststoffstreifen mit guten Gleiteigenschaften bestehen. Die Rollenkette ist durch eine Ausnehmung im Kassettengehäuse mechanisch z.B. über einen Hebel mit dem Fädelmechanismus des Recorders verbunden. Soll für den Fädelvorgang die Rollenkette zwischen Bandwickel und Antriebsriemen eingezogen werden, muß die Antriebsrichtung für das Magnetband so gewählt sein, daß durch die Drehrichtung die Rollenkette automatisch zwischen Antriebsband und Magnetbandwickel eingezogen wird. Wenn Antriebsband und Magnetbandwickel voneinander durch die dazwischen liegende Kette getrennt sind, muß diese in dieser Stellung arretiert werden. Bei Verwendung einer Rollenkette wird über die nun ortsfest drehenden Rollen dieser Kette die Drehrichtung des Bandwickels, an dem die Rollenkette anliegt, geändert, so daß das Band für den Fädelvorgang von beiden Bandwickeln freigegeben wird. Bei Verwendung eines Kunststoffstreifens ist eine Umkehrung des Bandwickels in seiner Drehrichtung nicht gegeben, da aber der zweite vom Antriebsband noch angetriebene Wickel sich dreht, kann auch in diesem Fall das Band aus der Kassette herausgezogen werden. Nach Beendigung des Fädelvorganges wird die Bandtransportrichtung umgekehrt. Gleichzeitig wird die Arretierung für die Rollenkette bzw. für den Kunststoffstreifen aufgehoben, so daß diese aus dem Bereich zwischen Riemen und Bandwickel zurück in ihre Ausgangsposition gezogen werden. Das Gerät ist nun spielbereit.

Um das Band wieder in die Kassette zurückzuspulen, muß die Rollenkette oder der Kunststoffstreifen erneut, wie eingangs beschrieben, zwischen Antriebsriemen und Bandwickel gebracht werden, so daß dann der Rückspulvorgang stattfinden kann. Sobald das Band in die Kassette zurückgezogen ist, werden, wie schon vorher beschrieben, Rollenkette oder Kunststoffstreifen aus dem Bereich zwischen Antriebsriemen und Bandwickel in ihre Ausgangsstellung zurückgeführt.

Da die Rollenkette oder auch der Kunststoffstreifen beweglich oder zumindest elastisch sind, können sie sich in ihrer Krümmung dem jeweiligen Wickelradius des Bandwickels anpassen, so daß ein Aus- bzw. Einfädelvorgang bei jedem Wickeldurchmesser stattfinden kann.

Anhand der Figuren soll die Erfindung näher erläutert werden.

Fig. 1 zeigt eine in einem Recorder eingelegte Kassette

Fig. 2 zeigt eine Kassette in einer Darstellung während des Ein- bzw. Ausfädelvorganges

Fig. 3 zeigt eine Kassette im Spielbetrieb.

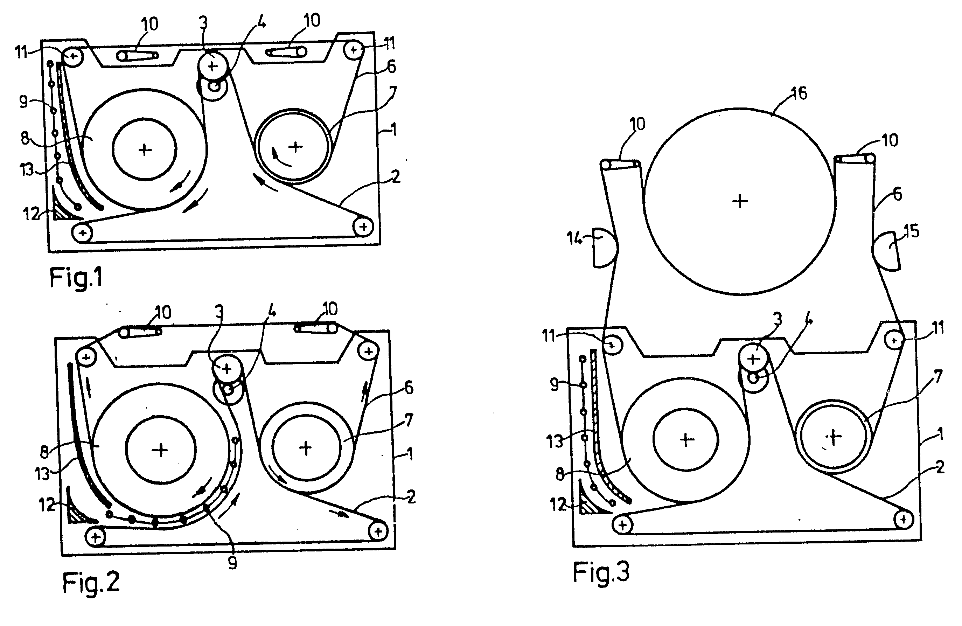

Fig. 1 zeigt eine in einem Recorder eingelegte Kassette 1 mit Riemenantrieb, aus der das Magnetband 6 herausgezogen werden kann. Der Antriebsriemen 2 liegt am äußeren Umfang der Magnetbandwickel 7 und 8 an. Wird der Riemen 2 an der Rolle 3 von der Capstan-Welle 4 angetrieben, drehen sich die Wickel 7 und 8 z.B. in der eingezeichneten Richtung und das Magnetband 6 wird vom Wickel 8 zum Wickel 7 transportiert. In dieser Anordnung wird das Magnetband angetrieben, wenn die Betriebsart schneller Vorlauf, oder, bei geänderter Drehrichtung, schneller Rücklauf gewählt ist. Die Rollenkette 9 ist dabei in Ruhestellung zwischen den Führungselementen 12 und 13 angeordnet. Das Magnetband 6 wird innerhalb der Kassette 1 mit Hilfe der Umlenkrollen 11 so geführt, daß die für den Fädelvorgang erforderlichen, ebenfalls in Ruhestellung befindlichen Fädelwagen 10 der Fädelmechanik des Recorders in dieser Betriebsart zwischen Magnetband 6 und Kassettengehäuse liegen.

Fig. 2 zeigt die Kassette 1 in einer Darstellung während des Fädelvorganges im Recorder. Hierbei wird der Antriebsriemen 2 von der Capstan-Welle 4 über Rolle 3 in der eingezeichneten Richtung angetrieben. Die in Längsrichtung flexible Rollenkette 9 wird von der Fädelmechanik über ein bewegliches, nicht dargestelltes Element, welches durch eine Öffnung des Kassettengehäuses mit der Rollenkette 9 verbunden ist, zwischen Antriebsriemen 2 und Wickel 8 geschoben. Dabei wirkt die Drehrichtung des Bandantriebes unterstützend, so daß die Rollenkette automatisch in ihre richtige Position gezogen wird. In dieser Position wird die Rollenkette arretiert. Läuft der Antrieb weiter, wird eine Umkehrung der Drehrichtung für den Wickel 8 über die sich drehenden Rollen der Rollenkette 9 bewirkt, so daß das Magnetband 6 sowohl von Wickel 7 als auch von Wickel 8 abgespult wird. Mit Hilfe der beiden Fädelwagen 10 kann jetzt das Band aus der Kassette herausgezogen werden. Um eine Schlaufenbildung des Magnetbandes 6 während des Fädelvorganges zu vermeiden, muß die Rollenkette 9 gleich schnell mit dem Magnetband 6 bewegt werden.

Anstelle der Rollenkette 9 mit beweglichen Rollen, die z.B. in einem Kunststoffkäfig geführt werden, kann der Kraftschluß zwischen Antriebsband 2 und Magnetbandwickel 8, auch durch Einschieben eines gleitfähigen Kunststoffstreifens aufgehoben werden. Dabei ist es zweckmäßig, die dem Bandwickel 8 zugeordnete Seite des Kunststoffstreifens mit einem nichtgleitenden Material, z.B. Gummi, zu versehen, wodurch dieser Bandwickel während des Fädelvorganges am Drehen gehindert wird, so daß das Auf- bzw. Abspulen des Magnetbandes durch den angetriebenen zweiten Bandwickel 7 erfolgt.

Nach beendetem Fädelvorgang wird die Arretierung der Rollenkette 9 oder des Kunststoffstreifens aufgehoben und die Rollenkette 9 oder der Kunststoffstreifen wird mit Hilfe der Fädelmechanik wieder in seine Ruhestellung, wie in Fig. 1 und Fig. 3 angedeutet, zurücktransportiert. Unterstützend dafür kann eine Umkehrung der Antriebsrichtung des Antriebsbandes 2 sein.

Für ein Zurückführen des Magnetbandes in die Kassette, wird der vorher beschriebene Vorgang wiederholt, wobei die Drehrichtung des Antriebsbandes beim Zurückspulen in die Kassette umgekehrt ist.

Fig. 3 zeigt die Kassette mit herausgeführtem Magnetband 6 in einem Recorder in Wiedergabe- bzw. Aufnahmebetrieb. Das Magnetband 6 ist mit Hilfe der Fädelwagen 10 um eine Kopftrommel 16 gelegt. Feststehende Magnetköpfe 14 und 15 für Längsspuraufzeichnung bzw. Wiedergabe liegen am Magnetband 6 an. Die Rollenkette 9 befindet sich in Ruhestellung zwischen den Führungen 12 und 13.

In einer weiteren Ausführungsform der Kassette ist es auch möglich, die Rollenkette 9 spiegelbildlich am Bandwickel 7 anzuordnen oder in einer weiteren Ausführung mit Rollenkette und/oder Kunststoffstreifen beide Bandwickel 7, 8 vom Eingriff des Antriebsriemens 2 zu trennen.

## Patentansprüche

1. Kassette für Datenaufzeichnung mit einem zwischen zwei in der Kassette näherungsweise in einer Ebene gelagerten Bandwickeln (7, 8) bewegbaren Band (6), insbesondere Magnetband, und mit einem in der Kassette angeordneten Antriebsband (2), das mit dem Umfang der Bandwickel (7, 8) in teilweise umschlingender Berührung steht, dadurch gekennzeichnet, daß Mittel (9) zur Aufhebung der umschlingenden Berührung zwischen Antriebsband (2) und mindestens einem Bandwickel (7, 8) vorgesehen sind.

2. Kassette nach Anspruch 1, dadurch gekennzeichnet, daß die Mittel (9) zur Aufhebung der teilweise umschlingenden Berührung aus einer oder mehrerer in Längsrichtung flexibler innerhalb der Kassette angeordneter Rollenketten bestehen, die zwischen Antriebsband (2) und Bandwickel (7, 8) einschiebbar sind.

3. Kassette nach Anspruch 1, dadurch gekennzeichnet, daß die Mittel (9) zur Aufhebung der teilweise umschlingenden Berührung aus einem oder mehreren innerhalb der Kassette angeordneten gleitfähigen Kunststoffstreifen bestehen, die zwischen Antriebsband (2) und Bandwickel (7, 8) einschiebbar sind.

4. Kassette nach einem der Ansprüche 1—3, dadurch gekennzeichnet, daß die Mittel (9) zur Aufhebung der teilweise umschlingenden Berührung zwischen Antriebsband (2) und Bandwickel (7, 8) von außen durch eine Öffnung in der Kassette bewegbar sind.

5. Kassette nach einem der Ansprüche 1 bis 4 für den Einsatz in einem Magnetbandrekorder, bei dem das Magnetband (6) für den Spielbetrieb aus einer Schmalseite der Kassette (1) durch Fädelwagen (10) herausgezogen und um eine rotierende Kopftrommel (16) gelegt wird, und nach Zurückführung der Fädelwagen (10) in ihre Ruhestellung, in die Kassette eingezogen wird.

## Revendications

1. Cassette pour l'enregistrement de données comportant une bande (6), notamment une bande magnétique, déplaçable entre deux bobines (7, 8) tourillonnées approximativement dans un plan à l'intérieur de la cassette, et une bande d'entraînement (2), qui est disposée dans la cassette et est en contact, d'une manière partiellement enveloppante, avec la périphérie des bobines (7, 8) de la bande, caractérisée en ce que des moyens (9) sont prévus pour supprimer le contact enveloppant entre la bande d'entraînement (2) et au moins une bobine (7, 8) de la bande.

2. Cassette selon la revendication 1, caractérisée en ce que les moyens (9) servant à supprimer le contact partiellement enveloppant sont constitués par une ou plusieurs chaînes à galets, flexibles dans la direction longitudinale, disposées à l'intérieur de la cassette et pouvant être insérées entre la bande d'entraînement (2) et les bobines (7, 8) de la bande.

3. Cassette selon la revendication 1, caractérisée en ce que les moyens (9) servant à supprimer le contact partiellement enveloppant sont constitués par une ou plusieurs bandes de matière plastique aptes à glisser, disposées à l'intérieur de la cassette et pouvant être insérées entre la bande d'entraînement (2) et les bobines (7, 8) de la bande.

4. Cassette selon l'une des revendications 1—3, caractérisée en ce que les moyens (9) servant à supprimer le contact partiellement enveloppant entre la bande d'entraînement (2) et les bobines (7, 8) de la bande peuvent être déplacés à partir de l'extérieur à travers une ouverture ménagée dans la cassette.

5. Cassette selon l'une des revendications 1 à 4, destinée à être utilisée dans un enregistreur à bande magnétique, dans lequel la bande magnétique (6) est tirée, pour la lecture, à patir d'un petit côté de la cassette (1), au moyen d'un chariot d'enfilage (10), est appliquée autour d'un tambour porte-têtes (16) rotatif et est introduite dans la cassette après retour du chariot d'enfilage (10) dans sa position de repos.

**Claims**

1. Cassette for data recording having a tape (6), more particularly a magnetic tape, which may be moved between two reels (7, 8) which are mounted approximately in a plane in the cassette, and having a drive belt (2) arranged in the cassette, which is in partially enveloping contact with the periphery of the reels (7, 8), characterised in that means (9) are provided for disengaging the enveloping contact between the drive belt (2) and at least one reel (7, 8).

2. A cassette according to claim 1, characterised in that the means (9) for disengaging the partial enveloping contact consist of one or more roller chains arranged inside the cassette and flexible in a longitudinal direction, and being capable of insertion between the drive belt (2) and the reel (7, 8).

3. A cassette according to claim 1, characterised in that the means (9) for stopping the partial enveloping contact consist of one or more sliding plastics strips which are arranged inside the cassette, and are capable of insertion between the drive belt (2) and reel (7, 8).

4. A cassette according to any one of claims 1—3, characterised in that the means (9) for disengaging the partial enveloping contact between the drive belt (2) and the reel (7, 8) are movable from outside through an opening in the cassette.

5. A cassette according to any one of claims 1 to 4 for insertion in a magnetic tape recorder, in which the magnetic tape (6) for the play mode is drawn out of a narrow face of the cassette (1) by loading sliders (10) and is placed around a rotating head drum (16) and after guiding the loading sliders (10) back into their rest position, is drawn into the cassette.

Fig.1

Fig.2

Fig.3